# EUROPÄISCHE PATENTSCHRIFT

(11) **EP 2 795 400 B1**
(45) Veröffentlichungstag und Bekanntmachung des Hinweises auf die Patenterteilung: **12.10.2016**
(21) Anmeldenummer: 12788536.6
(22) Anmeldetag: 21.11.2012
(51) Int. Cl.: G02B 27/09, G03B 21/14, G03B 33/06, G03B 21/20

(54) **PROJEKTIONSSYSTEM MIT MEHREREN LICHTEMITTIERENDEN ELEMENTEN**
PROJECTION SYSTEM WITH PLURAL LIGHT EMITTING ELEMENTS
SYSTÈME DE PROJECTION AVEC PLUSIEURS ÉLÉMENTS D'ÉMISSION DE LUMIÈRE

(30) Priorität: 20.12.2011 DE 102011089209
(43) Veröffentlichungstag der Anmeldung: 29.10.2014
(73) Patentinhaber: OSRAM GmbH, 80807 München (DE)
(72) Erfinder: WESSELING, Clemens, 14482 Potsdam (DE); REHN, Henning, 13407 Berlin (DE)
(86) Internationale Anmeldenummer: PCT/EP2012/073187
(87) Internationale Veröffentlichungsnummer: WO 2013/092078

(56) Entgegenhaltungen:
- EP-A1- 1 403 695
- DE-A1-102009 024 894
- DE-T2- 60 309 400
- JP-A- 2007 047 707
- US-A- 5 162 844
- US-B1- 6 227 669

## Beschreibung

### Technisches Gebiet

Die Erfindung betrifft ein Projektionssystem gemäß dem Oberbegriff des Anspruchs 1.

### Stand der Technik

DE 603 09 400 T2 beschreibt ein Projektionssystem, das mit mehreren lichtemittierenden Elementen wie beispielsweise LEDs, denen jeweils ein optischer Integrator nachgeordnet ist, das gleichmäßige Beleuchten einer Projektionsoberfläche erlaubt.

Ebenso beschreiben die WO 2008/027692 A2 sowie die WO 97/01727 A1 das Auskoppeln von Licht aus einem lichtemittierenden Element mittels eines optischen Integrators.

Aus dem Dokument EP 2211090 A1 ist ein Projektionssystem zum Beleuchten einer Projektionsoberfläche bekannt. Das Projektionssystem gemäß der EP 2211090 A1 weist Lichtquellen auf, die jeweils aus mehreren lichtemittierenden Elementen bestehen. Die Lichtelemente emittieren jeweils Licht einer anderen Wellenlänge. In eine Eintrittsöffnung eines optischen Integrators des Projektionssystems wird Licht jedes lichtemittierenden Elements so eingekoppelt, dass an seiner Austrittsöffnung gemischtes und kollimiertes Licht aller lichtemittierenden Elemente austritt. Durch eine Abbildungsoptik wird das aus der Austrittsöffnung jedes Integrators austretende Licht auf die Projektionsoberfläche projiziert.

Aufgrund der geometrischen Verhältnisse und der allgemeinen optischen Gesetze kommt es dabei nicht nur zu einer Abbildung der Austrittsöffnung des Integrators, sondern auch zu einer Abbildung der durch den Integrator sichtbaren Eintrittsöffnung, wo das Licht der lichtemittierenden Elemente noch nicht gemischt ist. Durch die Überlagerung der beiden Abbildungen auf der Projektionsoberfläche verschlechtert sich die wahrgenommene Abbildungsqualität.

Dies soll durch einen in der EP 2211090 A1 vorgesehenen Diffusor verbessert werden. Jedoch hat der Diffusor den Nachteil, die Lichteffizienz zu verschlechtern.

EP1403695 A1 offenbart eine Projektionsvorrichtung, bei der eine homogene Ausleuchtung mit einer matrixförmigen Anordnung von Konvexlinsen erreicht wird.

### Darstellung der Erfindung

Die Aufgabe der vorliegenden Erfindung ist es, ein Projektionssystem der vorgenannten Art bereit zu stellen, bei dem die Abbildungsqualität verbessert werden kann ohne den oben erwähnten Nachteil in Kauf nehmen zu müssen.

Diese Aufgabe wird gelöst durch Merkmale des Anspruchs 1.

Bei der Erfindung werden durch das optische Element virtuelle Bilder der Eintrittsöffnung und der Austrittsöffnung des Integrators erzeugt, deren Abstand zueinander größer als die Länge des optischen Integrators ist. Bei der Abbildung des virtuellen Bildes der Austrittsöffnung auf die Projektionsoberfläche wird nunmehr das virtuelle Bild der Eintrittsöffnung des Integrators in eine von der Projektionsoberfläche weit entfernte Ebene abgebildet, wodurch sein störender Einfluss auf die Abbildung der Austrittsfläche vernachlässigbar klein wird.

Dadurch kann auf den Einsatz von Diffusionselementen, die die Beleuchtungseffizienz verschlechtern, verzichtet werden.

Ferner wird die Effizienz des Projektionssystems weiter dadurch gewährleistet, dass zum Auskoppeln des Lichts aus den lichtemittierenden Elementen für jede Lichtquelle ein Integrator verwendet wird. Der optische Integrator führt eine additive Farbmischung durch. Somit muss Licht einer bestimmten Wellenlänge nur erzeugt werden, wenn dieses benötigt wird. Eine spektrale Filterung und der damit einhergehende Effizienzverlust bei der Erzeugung von farbigen Bildern sind überflüssig.

Bevorzugt enthält jede Lichtquelle mindestens drei lichtemittierende Elemente unterschiedlicher Farbe (RGB), die selektiv ansteuerbar sind, so dass das aus der Austrittsöffnung des Integrators austretende gemischte und kollimierte Licht eine selektiv wählbare Farbe hat. So können neben weißem Licht auch sämtliche Mischfarben, die die verwendeten lichtemittierenden Elemente zulassen, erzeugt werden.

Vorzugsweise ist die Abbildungsoptik durch mindestens eine Fresnel-Linse gebildet. Somit lässt sich eine Abbildungsoptik mit großer Brennweite von beispielsweise 0,5m bis 1m, einem großen Öffnungsverhältnis von beispielsweise 0,7 bis 1,2 und geringer Masse erlangen. Durch die Anordnung mehrerer Fresnel-Linsen entlang der optischen Achse können ferner Bildfehler reduziert werden.

Bevorzugt enthält das Projektionssystem eine Vielzahl von matrixartig angeordneten und selektiv ansteuerbaren Lichtquellen mit jeweils zugeordneter Konvexlinse, so dass auf der Projektionsoberfläche ein entsprechendes Pixelbild abbildbar ist. So können bei geeigneter Ansteuerung mit geringem Aufwand Bilder sowie Filme ausreichender Auflösung beispielsweise auf einer Gebäudewand als Projektionsoberfläche dargestellt werden.

Der Durchmesser der Abbildungsoptik ist dabei bevorzugt größer als die größte Ausdehnung der von den matrixartig angeordneten Lichtquellen eingenommenen Fläche. Dadurch können Verluste durch Vignettierung vermieden werden.

Weitere vorteilhafte Ausgestaltungen finden sich in den abhängigen Ansprüchen.

### Kurze Beschreibung der Zeichnungen

Im Folgenden soll die Erfindung anhand eines Ausführungsbeispiels näher erläutert werden. Die Figuren zeigen:
- Fig. 1a: eine schematische Ansicht eines Ausführungsbeispiels des erfindungsgemäßen Projektionssystems;
- Fig. 1b: eine schematische Draufsicht einer RGB-MultichipLED gemäß dem Ausführungsbeispiel;
- Fig. 2a: eine schematische Ansicht eines Strahlengangs eines Projektionssystems gemäß einem ersten Vergleichsbeispiel;
- Fig. 2b: eine schematische Ansicht eines Strahlengangs des Projektionssystems gemäß dem Ausführungsbeispiel; und
- Fig. 3: eine Weiterbildung des Projektionssystems gemäß dem Ausführungsbeispiel.

### Bevorzugte Ausführung der Erfindung

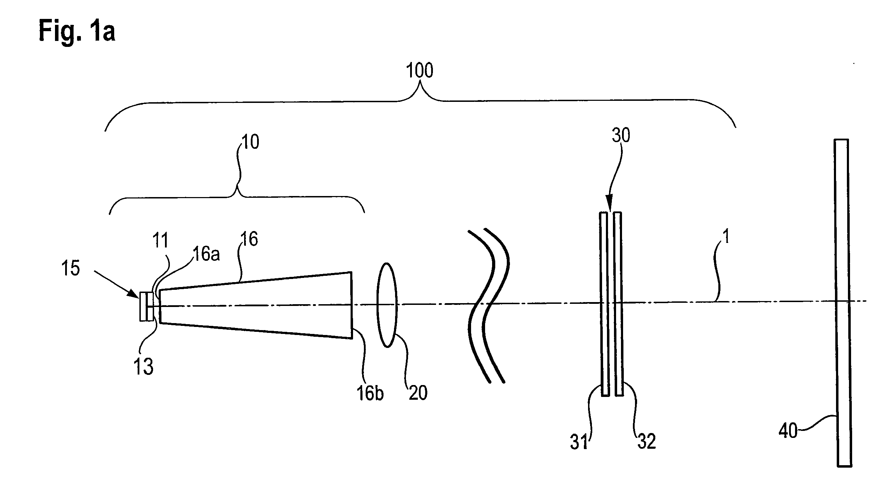

In Fig. 1a ist ein Projektionssystem 100 gemäß der bevorzugten Ausführungsform der vorliegenden Erfindung dargestellt. Das Projektionssystem 100 weist entlang einer gemeinsamen optischen Achse 1 eine Lichtquelle 10, eine Konvexlinse 20 als optisches Element und eine Abbildungsoptik 30 in dieser Reihenfolge auf. Die Abbildungsoptik 30 ist durch zwei Fresnel-Linsen 31 und 32 ausgebildet.

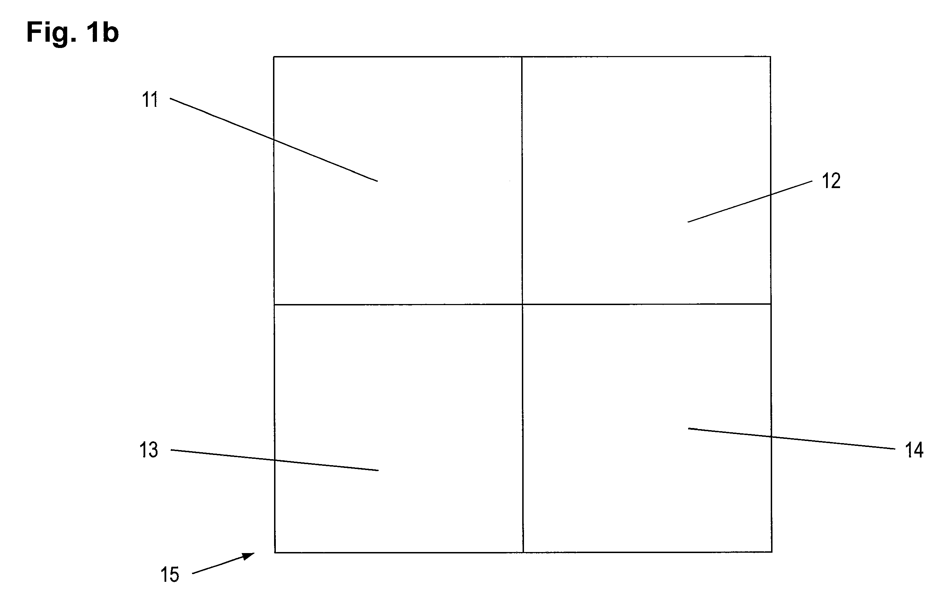

Die Lichtquelle 10 weist als eine Lichteinheit eine RGB-Multichip-LED 15 und als einen optischen Integrator einen konischen Lichtleitstab 16 auf. Die RGB-Multichip-LED 15, die in Fig. 1b in Draufsicht dargestellt ist, beinhaltet als lichtemittierende Elemente vier LED-Elemente 11, 12, 13 und 14, die auf einer gemeinsamen Ebene angeordnet sind. Die LED-Elemente 11 und 13 stellen grünes Licht bereit, das LED-Element 12 stellt blaues Licht bereit und das LED-Element 13 stellt rotes Licht bereit. Somit erzeugt die RGB-Multichip-LED 15 ein Licht mit unterschiedlichen spektralen Anteilen. Die RGB-Multichip-LED 15 ist auf der optischen Achse 1 direkt vor einer Eintrittsöffnung 16a des Lichtleitstabs 16 angeordnet, so dass ein Großteil des von der RGB-Multichip-LED 15 emittierten Lichts auf eine Eintrittsöffnung 16a des Lichtleitstabs 16 fällt. Hierdurch wird eine größtmögliche Effizienz erlangt. Im Lichtleitstab 16 wird Licht verschiedener Wellenlängen additiv gemischt und durch eine Austrittsöffnung 16b ausgegeben.

Dem Lichtleitstab 16 auf der optischen Achse nachgeordnet befindet sich ein optisches Element 20, das in der vorliegenden Ausführungsform als Konvexlinse ausgebildet ist. Die Austrittsöffnung 16b des Lichtleitstabs 16 wird durch die Abbildungsoptik 30 auf eine Projektionsoberfläche 40 in größerer Entfernung abgebildet. Bei dem vorliegenden Ausführungsbeispiel kann diese Entfernung beispielsweise zwischen zwei Meter und zwölf Meter betragen.

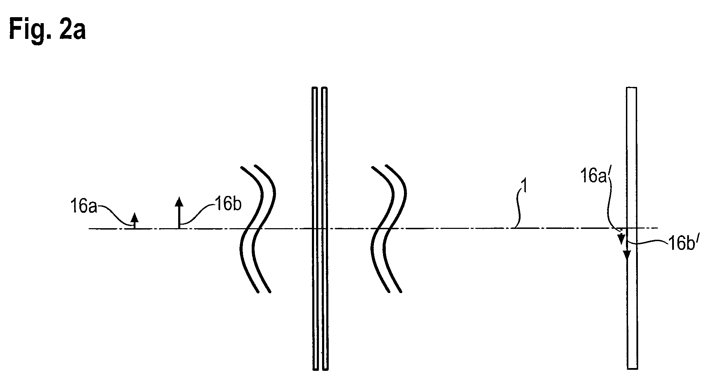

Nachfolgend wird die Wirkungsweise der Konvexlinse 20 erläutert. In Fig. 2a ist hierzu eine schematische Ansicht eines Strahlengangs eines Projektionssystems gemäß einem ersten Vergleichsbeispiel dargestellt. Das Vergleichsbeispiel weist die Konvexlinse 20 nicht auf. In Fig. 2a ist ersichtlich, dass bei dem Vergleichsbeispiel ohne Konvexlinse 20 sowohl die Eintrittsöffnung 16a als auch die Austrittsöffnung 16b auf der Projektionsoberfläche 40 als virtuelle Eintrittsöffnung 16a' beziehungsweise als virtuelle Austrittsöffnung 16b' abgebildet werden. Werden die virtuelle Eintrittsöffnung 16a' und die virtuelle Austrittsöffnung 16b' gemeinsam scharf auf der Projektionsoberfläche 40 abgebildet, überlagern sich diese Abbilder. Weist der Lichtleitstab 16 beispielsweise einen kreisförmigen Querschnitt auf, ergibt sich als Abbild auf der Projektionsoberfläche 40 eine Scheibe mit einer kleineren helleren Scheibe in seiner Mitte. Es wird somit eine Pixel erzeugt, dass in der Mitte eine höhere Lichtintensität als am Rand aufweist.

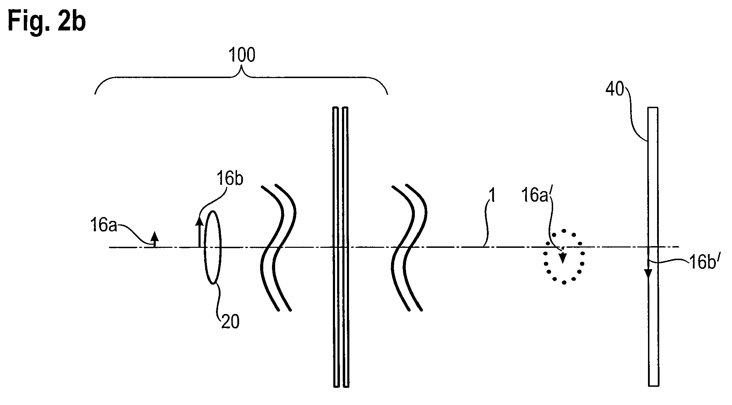

Fig. 2b zeigt eine schematische Ansicht eines Strahlengangs des vorliegenden Ausführungsbeispiels. Durch die unmittelbar hinter der Austrittsöffnung 16b des Lichtleitstabs 16 angeordnete Konvexlinse 20 werden die virtuelle Eintrittsöffnung 16a' und die virtuelle Austrittsöffnung 16b' voneinander beabstandet abgebildet, so dass eine gleichzeitige scharfe Abbildung nicht stattfindet. Somit wird ein annähernd homogen beleuchtetes Pixel auf der Projektionsoberfläche 40 abgebildet.

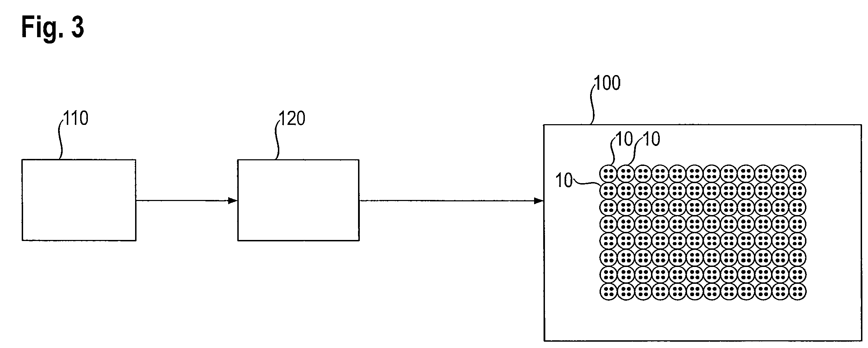

Eine Weiterbildung des vorstehenden Ausführungsbeispiels ist in Fig. 3 dargestellt. Das Projektionssystem 100 weist in der vorliegenden Weiterbildung mehrere der Lichtquellen 10 und eine der Anzahl der mehreren Lichtquellen 10 entsprechende Anzahl der Konvexlinsen 20 auf. Die Lichtquellen 10 sind zusammen mit ihren entsprechend zugeordneten Konvexlinsen 20 in einer Matrix-Struktur angeordnet. In Fig. 3 ist die Matrix-Struktur, durch acht untereinander angeordnete Reihen mit jeweils zwölfmal der Kombination der Lichtquelle 10 und der Konvexlinse 20 ausgebildet. Hierbei sind die Lichtquellen 10 und ihre entsprechend zugeordneten Konvexlinsen 20 jeweils in einer zur optischen Achse senkrechten Ebene angeordnet.

Die in Fig. 3 nicht dargestellte Abbildungsoptik 30 mit den Fresnel-Linsen 31 und 32 wird so zu der Kombination der Lichtquellen 10 und Konvexlinsen 20 platziert, dass deren Abbildung in der gewünschten Entfernung in einer Ebene liegt. Konkret werden die Austrittsöffnungen 16b der Integratoren 16, die gemäß einer Matrix in einer gemeinsamen Ebene angeordnet sind, durch die Abbildungsoptik 30, die gegenüber den Lichtquellen 10 und den Konvexlinsen 20 einen großen Durchmesser aufweist, im gewünschten Abstand mit dem gewünschten Abbildungsmaßstab auf die Projektionsoberfläche 40 abgebildet.

Ferner sind in Fig. 3 eine Speichervorrichtung 110 und eine Bildverarbeitungsvorrichtung 120 dargestellt. In der Speichervorrichtung sind Bilddaten oder Videodaten gespeichert, die durch das Projektionssystem 100 auf die Projektionsoberfläche 40 projiziert werden sollen. Bei den Bilddaten oder Videodaten kann es sich beispielsweise um Daten des MPEG-Typs handeln. Eine entsprechende MPEG-Datei kann beispielsweise eine Auflösung von zwölf Mal acht entsprechend der Anordnung der Matrixstruktur haben.

Die Speichervorrichtung 110 gibt die Bilddaten oder Videodaten an die Bildverarbeitungsvorrichtung 120 aus. Die Bildverarbeitungsvorrichtung 120 wandelt die bereitgestellten Daten in Ansteuersignale für die Lichtquellen 10 und lichtemittierenden Elemente 11 bis 14 und gibt diese an das Projektionssystem 100 aus.

Jede Lichtquelle 10 stellt ein Pixel dar. Durch geeignete selektive Ansteuerung der einzelnen Lichtquellen 10 werden somit entsprechende Pixel auf der Projektionsoberfläche 40 erzeugt. Die Farbe der einzelnen Pixel wird durch geeignete Ansteuersignale für die entsprechenden lichtemittierenden Elemente 11 bis 14 bestimmt.

Bei der Projektionsoberfläche 40 handelt es sich in Fig. 3 um eine Gebäudewand. Die in Fig. 3 dargestellte Weiterbildung des Projektionssystems 100 projiziert auf die Gebäudewand 40 ein in der Speichervorrichtung 110 gespeichertes Bild oder Video mit einer Auflösung entsprechend der Anzahl der Lichtquellen 10.

Die gemäß einer Matrix angeordneten Austrittsöffnungen 16b können eine erhebliche Fläche abdecken. Bei quadratischen Austrittsöffnungen 16b mit einer Kantenlänge von 20mm und acht Reihen mit jeweils zwölf Lichtleitstäben 16 ergibt sich eine Fläche von 240mm mal 180mm. Um diese Fläche geeignet abbilden zu können ist eine Abbildungsoptik 30 mit großer Brennweite und großer Öffnung erforderlich. Die Brennweite kann beispielsweise bei 400mm oder 500mm liegen. Um trotz der guten Kollimation durch die Lichtleitstäbe 16 eine gewünschte hohe Beleuchtungsstärke auf der Projektionsoberfläche 40 zu erreichen, kann die Abbildungsoptik eine gegenüber der Kantenlänge der Matrix größere Kantenlänge aufweisen.

Im vorstehenden Ausführungsbeispiel ist die Lichteinheit 15 durch eine RGB-Multichip-LED (R=Rot, G=Grün, B=Blau) mit vier LEDs ausgebildet. Die Lichteinheit kann auch durch eine RGBW-Multichip-LED (W=Weiss) ausgebildet sein. Ferner kann die Lichteinheit durch jegliche lichtemittierende Elemente ausgebildet sein, die in räumlicher Nähe wie beispielsweise auf einer Ebene angeordnet sind. Kombinationen von monochromen oder weißen LED-Elementen als Lichteinheit 15 sind denkbar. Die Strahlungsemission kann auch Strahlung im ultravioletten und/oder infraroten Spektralbereich umfassen. Ferner sind Kombinationen anderer lichtemittierenden Elemente wie Laserdioden, Laser, Glühlampen, Entladungslampen, ebenso denkbar. Weiterhin können Laser-Activated Remote Phosphor (LARP) Anordnungen als lichtemittierende Elemente verwendet werden, bei denen eine von der Strahlungsquelle räumliche getrennte Leuchtstoffschicht durch die emittierte Strahlung einer Laserdiode angeregt und zur Abgabe von Fluoreszenzstrahlung veranlasst wird. Außerdem können auch organische LED (OLED) als lichtemittierende Elemente verwendet werden. Wesentlich ist, dass die lichtemittierenden Elemente so ausgerichtet sind, dass sie in die Eintrittöffnung des optischen Integrators strahlen.

Vorstehend ist als optischer Integrator ein konischer Lichtleitstab 16 vorgesehen. Alternativ kann der Integrator auch durch geeignete Spiegel ausgebildet werden. Wesentlich ist, dass der optische Integrator so gestaltet ist, dass das in die Eintrittsöffnung einfallende Licht, das aus verschiedenfarbigen lichtemittierenden Elementen stammt, gemischt und kollimiert wird.

In den vorstehenden Erläuterungen ist die Abbildungsoptik 30 durch die zwei Fresnel-Linsen 31 und 32 ausgebildet. Die Abbildungsoptik 30 kann aber auch durch geeignete andere Linsen oder optische Bauteile ausgebildet sein. Wesentlich hierbei ist, dass diese eine gewünschte hohe Beleuchtungsstärke des Projektionssystems 100 und eine Abbildung in gewünschter großer Entfernung sicherstellen können.

## Patentansprüche

1. Projektionssystem (100) zum Beleuchten einer Projektionsoberfläche (40),
wobei das Projektionssystem (100) eine Vielzahl von matrixartig angeordneten und selektiv ansteuerbaren Lichtquellen (10) mit jeweils zugeordneter Konvexlinse (20) enthält, so dass auf der Projektionsoberfläche (40) ein entsprechendes Pixelbild abbildbar ist,
wobei jede Lichtquelle (10) aus mehreren lichtemittierenden Elementen (11 bis 14) und einem optischen Integrator (16) mit einer Eintrittsöffnung (16a) und einer Austrittsöffnung (16b) gebildet ist, in dessen Eintrittsöffnung (16a) das Licht jedes lichtemittierenden Elements (11 bis 14) so eingekoppelt wird, dass aus seiner Austrittsöffnung (16b) das gemischte Licht aller lichtemittierenden Elemente (11 bis 14) austritt,
und mit einer Abbildungsoptik (30), die das aus der Austrittsöffnung jedes Integrators (16) austretende Licht auf die Projektionsoberfläche (40) projiziert,
wobei die jeder Lichtquelle (10) zugeordnete jeweilige Konvexlinse (20) zwischen der Austrittsöffnung (16b) jedes Integrators (16) und der Abbildungsoptik (30) angeordnet ist und das virtuelle Bild der Eintrittsöffnung (16a) so entlang einer optischen Achse (1) des Projektionssystems (100) verschiebt, dass sein durch die Abbildungsoptik (30) erzeugtes Bild auf der Projektionsoberfläche (40) nicht sichtbar ist.

2. Projektionssystem (100) gemäß Anspruch 1, bei dem die lichtemittierenden Elemente für die Emission elektromagnetischer Strahlung unterschiedlicher Spektren ausgelegt sind.

3. Projektionssystem (100) nach einem der vorigen Ansprüche, bei dem die jeweilige Konvexlinse (20) in unmittelbarer Nähe zur Austrittsöffnung (16b) jedes Integrators (16) angeordnet ist.

4. Projektionssystem (100) nach Anspruch 1, **dadurch gekennzeichnet, dass** die Konvexlinse (20) das virtuelle Bild (16a') der Eintrittsöffnung (16a) so verschiebt, dass es vor der Projektionsoberfläche (40) liegt.

5. Projektionssystem nach einem der vorherigen Ansprüche, **dadurch gekennzeichnet, dass** jeder Integrator (16) aus einem konischen Lichtleitstab gebildet ist.

6. Projektionssystem (100) nach einem der vorherigen Ansprüche, **dadurch gekennzeichnet, dass** jeder Integrator (16) durch Spiegel gebildet ist.

7. Projektionssystem (100) nach einem der vorherigen Ansprüche, **dadurch gekennzeichnet, dass** jede Lichtquelle (10) mindestens drei lichtemittierende Elemente (11 bis 14) unterschiedlicher Farbe (RGB) enthält, die selektiv ansteuerbar sind, so dass das aus der Austrittsöffnung (16b) des Integrators (16) austretende gemischte und kollimierte Licht eine selektiv wählbare Farbe hat.

8. Projektionssystem (100) nach einem der vorherigen Ansprüche, **dadurch gekennzeichnet, dass** die Abbildungsoptik (30) durch mindestens eine Fresnel-Linse (31, 32) gebildet ist.

9. Projektionssystem (100) nach einem der vorherigen Ansprüche, **dadurch gekennzeichnet, dass** der Durchmesser der Abbildungsoptik größer ist als die größte Ausdehnung der durch die matrixartig angeordneten Lichtquellen eingenommene Fläche.

## Claims

1. Projection system (100) for illuminating a projection surface (40),
wherein the projection system (100) contains a multiplicity of selectively drivable light sources (10) arranged in a matrix-like fashion with in each case an assigned convex lens (20), such that a corresponding pixel image can be imaged on the projection surface (40),
wherein each light source (10) is formed from a plurality of light-emitting elements (11 to 14) and an optical integrator (16) having an entrance opening (16a) and an exit opening (16b), into the entrance opening (16a) of which the light of each light-emitting element (11 to 14) is coupled such that the mixed light of all the light-emitting elements (11 to 14) emerges from its exit opening (16b),
and comprising an imaging optical unit (30), which projects the light emerging from the exit opening of each integrator (16) onto the projection surface (40),
wherein the respective convex lens (20) assigned to each light source (10) is arranged between the exit opening (16b) of each integrator (16) and the imaging optical unit (30) and shifts the virtual image of the entrance opening (16a) along an optical axis (1) of the projection system (100) such that its image generated by the imaging optical unit (30) is not visible on the projection surface (40).

2. Projection system (100) according to Claim 1, wherein the light-emitting elements are designed for emitting electromagnetic radiation having different spectra.

3. Projection system (100) according to either of the preceding claims, wherein the respective convex lens (20) is arranged in direct proximity to the exit opening (16b) of each integrator (16) .

4. Projection system (100) according to Claim 1, **characterized in that** the convex lens (20) shifts the virtual image (16a') of the entrance opening (16a) such that it lies in front of the projection surface (40).

5. Projection system according to any of the preceding claims, **characterized in that** each integrator (16) is formed from a conical light guiding rod.

6. Projection system (100) according to any of the preceding claims, **characterized in that** each integrator (16) is formed by mirrors.

7. Projection system (100) according to any of the preceding claims, **characterized in that** each light source (10) contains at least three light-emitting elements (11 to 14) of different colors (RGB), which are selectively drivable, such that the mixed and collimated light emerging from the exit opening (16b) of the integrator (16) has a color which can be chosen selectively.

8. Projection system (100) according to any of the preceding claims, **characterized in that** the imaging optical unit (30) is formed by at least one Fresnel lens (31, 32).

9. Projection system (100) according to any of the preceding claims, **characterized in that** the diameter of the imaging optical unit is greater than the largest extent of the area occupied by the light sources arranged in a matrix-like fashion.

## Revendications

1. Système de projection (100) pour l'éclairage d'une surface de projection (40),
dans lequel le système de projection (100) contient une multiplicité de sources de lumière (10) disposées en forme de matrice et pouvant être commandées de façon sélective avec une lentille convexe respectivement associée (20), de telle manière qu'une image de pixels correspondante puisse être reproduite sur la surface de projection (40),
dans lequel chaque source de lumière (10) est formée de plusieurs éléments d'émission de lumière (11 à 14) et d'un intégrateur optique (16) avec une ouverture d'entrée (16a) et une ouverture de sortie (16b), dans l'ouverture d'entrée (16a) duquel la lumière de chaque élément d'émission de lumière (11 à 14) est injectée de telle manière que la lumière mélangée de tous les éléments d'émission de lumière (11 à 14) sorte par son ouverture de sortie (16b),
et avec une optique de reproduction (30), qui projette sur la surface de projection (40) la lumière sortant de l'ouverture de sortie de chaque intégrateur (16),
dans lequel la lentille convexe respective (20) associée à chaque source de lumière (10) est disposée entre l'ouverture de sortie (16b) de chaque intégrateur (16) et l'optique de reproduction (30) et déplace l'image virtuelle de l'ouverture d'entrée (16a) le long d'un axe optique (1) du système de projection (100) de telle manière que son image produite par l'optique de reproduction (30) ne soit pas visible sur la surface de projection (40).

2. Système de projection (100) selon la revendication 1, dans lequel les éléments d'émission de lumière sont conçus pour l'émission de rayonnement électromagnétique de différents spectres.

3. Système de projection (100) selon l'une quelconque des revendications précédentes, dans lequel la lentille convexe respective (20) est disposée à proximité immédiate de l'ouverture de sortie (16b) de chaque intégrateur (16).

4. Système de projection (100) selon la revendication 1, **caractérisé en ce que** la lentille convexe (20) déplace l'image virtuelle (16a') de l'ouverture d'entrée (16a) de telle manière qu'elle soit située avant la surface de projection (40) .

5. Système de projection selon l'une quelconque des revendications précédentes, **caractérisé en ce que** chaque intégrateur (16) est formé d'un barreau conique de guidage de lumière.

6. Système de projection (100) selon l'une quelconque des revendications précédentes, **caractérisé en ce que** chaque intégrateur (16) est formé par des miroirs.

7. Système de projection (100) selon l'une quelconque des revendications précédentes, **caractérisé en ce que** chaque source de lumière (10) contient au moins trois éléments d'émission de lumière (11 à 14) de couleur différente (RVB), qui peuvent être commandés de façon sélective, de telle manière que la lumière mélangée et collimatée sortant de l'ouverture de sortie (16b) de l'intégrateur (16) présente une couleur pouvant être choisie de façon sélective.

8. Système de projection (100) selon l'une quelconque des revendications précédentes, **caractérisé en ce que** l'optique de reproduction (30) est formée par au moins une lentille de Fresnel (31, 32).

9. Système de projection (100) selon l'une quelconque des revendications précédentes, **caractérisé en ce que** le diamètre de l'optique de reproduction est plus grand que la plus grande extension de la surface occupée par les sources de lumière disposées en forme de matrice.
